# EUROPEAN PATENT APPLICATION

(11) **EP 4 201 674 A1**
(43) Date of publication of application: **28.06.2023**
(21) Application number: 21217244.9
(22) Date of filing: 23.12.2021
(51) Int. Cl.: B32B 27/32

(54) **MULTI-LAYER FILM STRUCTURE COMPRISING MULTIMODAL ETHYLENE TERPOLYMERS AND RECYCLED LDPE FOR COLLATION-SHRINK FILMS**

(71) Applicant: Borealis AG, 1020 Vienna (AT); Abu Dhabi Polymers Co. Ltd (Borouge) LLC., Abu Dhabi (AE)
(72) Inventor: GITSAS, Antonios, 4021 Linz (AT); SEMAAN, Chantal, 08008 Barcelona (ES)
(74) Representative: Kador & Partner Part mbB

(57) **Abstract**

A layered film structure comprising a core layer C and external layers E1 and E2, wherein core layer C comprises a multimodal ethylene terpolymer (I) with at least one C₄ to C₁₂ alpha-olefin having an MFR₅ determined according to ISO 1133 of from 0.1 to 5 g/10 min and a density of 0.934 to 0.940 g/cm³ and a recycled LDPE having a MFR₂ determined according to ISO 1133 of from 0.1 to 10 g/10 min and a density in the range from 910 to 940 kg/m³ and wherein external layer(s) E1 and/or E2 comprise(s) a multimodal ethylene terpolymer (II) having an MFR₂ determined according to ISO 1133 of from 0.5 to 10 g/10 min and a density of 0.920 to 0.935 g/cm³.

## Description

The present invention relates to a layered film structure comprising a core layer and external layers, to a process for producing a layered film structure by coextrusion of the layers, to a collation shrink film comprising the layered film structure, and to the use of the collation shrink film for wrapping of articles.

Collation shrink films are films structures that are wrapped around an object to be packaged and shrunk to keep the units within the object together. The basic principle of collation shrink is to over-wrap a number of items in a loose film "sleeve" and then pass the wrapped goods through a heated shrink tunnel/oven to cause the collation shrink wrapping to occur. The film collapses around the multiple items and holds them in place. The most common use of these films is in the packaging of multiple containers (items), such as bottles or cans which might contain food, beverages and so on. The collation shrink film is wrapped around a number of the containers, for example a 6-pack of drinks or 24-pack of food cans, optionally held in a cardboard tray or pad, and shrunk around the containers.

Still today up to 5-10% of the merchandise is wasted during transportation. Improving the stability of the wrapped packs with improved collation-shrink film structures would allow the producers to have fewer losses. With today's challenges and overall direction of reducing the film thickness, the pack stability is further compromised.

Thus, for being suitable for use as a collation shrink film, a film structure needs to have a specific combination of properties: First and foremost, the film structure must show a good shrinkage behaviour in order to hold the wrapped goods tightly. Furthermore, suitable film structures need to have good mechanical properties such as high stiffness, especially in view of down-gauge ability and pack stability, and good tensile properties.

Still further, puncture resistance and tear resistance are among the most important properties for collation shrink films in order to provide sufficient pack stability and to enable safe handling of the package.

Good optical appearance is also required at the same time for the pack stand out on the shelf, i.e. consumer perception at the selling points.

Low Density Polyethylene (LDPE) currently dominates the collation films market segment with its good shrink behaviour, especially in transverse direction (TD).

It is known, however, that multimodal LLDPE exhibits significant benefits over LDPE when blended with other linear low density polyethylene and high density polyethylene components.

Thus, current collation shrink film solutions are film structures comprising LDPE and LLDPE and/or HDPE. The LDPE is necessary to give a high shrink rate and the LLDPE / HDPE component gives a combination of stiffness, toughness and bundling force (also known as cold shrink force).

For example, WO 2017/055174 discloses a collation shrink film which is based on a coextruded film structure comprising two layers A and B each made from specific ethylene copolymers.

Due to the latest regulations and market needs, industry is obliged to incorporate into packaging films certain amounts of polymer recyclate material. Due to the origin, previous use and difficult handling and sorting of the post consumer recycled (PCR) material, the recyclate normally has lower technical properties compared to virgin material, limiting or hindering its use in many applications.

Furthermore, it is desired to have as high as possible PCR content in the flexible packaging without increasing the film thickness while keeping the performance as described above for final targeted applications.

Hence, the market demands more sustainable films, i.e. with less material and at best with as high as possible recycled material, still fulfilling the needs packaging by a collation shrink film. This process is also known as downgauging.

WO 2020/207940 discloses a multilayer collation shrink film consisting of a core layer B) sandwiched by two outer layers A), wherein both outer layers A) consist of a1) 12 to 18 wt.-% of a multimodal polymer of ethylene with at least two different comonomers selected from alpha-olefins having from 4 to 10 carbon atoms, a2) which multimodal polymer of ethylene has a density in the range from 910 to 935 kg/m³, and a Mw/Mn of 2 to 8, a3) 12 to 18 wt.-% of a multimodal terpolymer of ethylene and at least two alpha olefin comonomers wherein the multimodal terpolymer has a density in the range from 930 to 940 kg/m³; and 64 to 76 wt.-% of a LDPE homopolymer being a virgin polymer having a density in the range from 905 to 940 kg/m³ and an MFR₂ in the range from 0.1 to 20 g/10 min; and core layer B) consisting of b1) 65 to 75 wt.-% of recycled LDPE having a MFR₂ in the range from 0.1 to 10 g/10 min and a density in the range from 910 to 940 kg/m³; and 35 to 25 wt.-% of a multimodal terpolymer of ethylene and at least two alpha olefin comonomers wherein the multimodal terpolymer has a density in the range from 930 to 940 kg/m³· However, the mechanical properties of the film still can be enhanced.

Therefore, it is an object of the present invention to provide a film structure suitable for use as a collation shrink film which fulfils the above requirements, especially a film structure which has an increased amount of post consumer recycled (PCR) material, good shrinkage behaviour and, at the same time, excellent stiffness and toughness.

The present invention is based on the finding that such a film structure for a collation shrinkage film can be provided by a layered film structure comprising a core and two external layers which comprise specifically selected ethylene terpolymers in the core and at least one of the external layers.

The present invention therefore provides a layered film structure comprising a core layer C and external layers E1 and E2, wherein core layer C comprises a multimodal ethylene terpolymer (I) with at least one C₄ to C₁₂ alpha-olefin having an MFR₅ determined according to ISO 1133 of from 0.1 to 5 g/10 min and a density of 0.934 to 0.940 g/cm³ and a recycled LDPE having a MFR₂ determined according to ISO 1133 of from 0.1 to 10 g/10 min and a density in the range from 910 to 940 kg/m³ and wherein external layer(s) E1 and/or E2 comprise(s) a multimodal ethylene terpolymer (II) having an MFR₂ determined according to ISO 1133 of from 0.5 to 10 g/10 min and a density of 0.920 to 0.935 g/cm³.

The combination of a core layer C and external layers E1 and E2 as characterized above solves the above described objects. In particular, this combination allows for a maintained stiffness and toughness of the film structure even with high amounts of recycled LDPE so that in use as collation shrink film pack the amount of material and, hence, the CO₂ footprint can be reduced, but the performance of the film is not affected.

Usually, multimodal ethylene terpolymer (I) is different from multimodal ethylene terpolymer (II).

Even more preferably, in the layered film structure the multimodal ethylene terpolymer (I) is a bimodal terpolymer comprising, or consisting of
a) a low molecular weight polymer which is a binary copolymer of ethylene and a C₄ to C₁₂ alpha-olefin and
b) a high molecular weight polymer which is either a binary copolymer of ethylene and 1-butene, if the low molecular weight polymer of a) is a binary copolymer of ethylene and a C₆ to C₁₂ alpha-olefin, or a terpolymer of ethylene, 1-butene and a C₆ to C₁₂ alpha-olefin.

Such bimodal ethylene terpolymers are, for example, disclosed in WO 03/066698. As far as definitions (such as for the "modality" of a polymer) and production methods for these ethylene terpolymers are concerned it is referred to WO 03/066698. Furthermore, all embodiments and preferred embodiments of such ethylene terpolymers as described in WO 03/066698, which have a density in the range of 0.934 to 0.940 g/cm³ are also preferred embodiments of ethylene terpolymer (I) in the present application, whether or not explicitly described herein.

Preferably, terpolymer (I) has a density in the range of 0.935 to 0.939 g/cm³.

Preferably, the C₄ to C₁₂ alpha-olefin of the low molecular weight copolymer fraction is selected from the group of 1-butene, 1-hexene, 4-methyl-1-pentene, 1-octene and 1-decene.

Furthermore, preferably the C₆ to C₁₂ alpha-olefin of the high molecular weight copolymer fraction is preferably selected from the group of 1-hexene, 4-methyl-1-pentene, 1-octene and 1-decene.

In another preferred embodiment of the invention, terpolymer (I) comprises, or consists of, a) a low molecular weight homopolymer of ethylene and b) a high molecular weight terpolymer of ethylene, 1-butene and a C₆ to C₁₂ alpha-olefin, preferably a high molecular weight terpolymer of ethylene, 1-butene and 1-hexene.

The weight average molecular weight of terpolymer (I) is preferably between 190,000 to 400,000 g/mol, more preferably between 200,000 to 300,000 g/mol. The low molecular weight polymer fraction has a weight average molecular weight preferably of 4,500 to 55,000 g/mol, more preferably of 5,000 to 50,000 g/mol and the high molecular weight polymer has a weight average molecular weight preferably of 450,000 to 1,000,000 g/mol, more preferably of 500,000 to 1,000,000 g/mol.

Terpolymer (I) preferably has a melt flow rate MFR₅ of 0.6 to 4 g/10 min, more preferably of 0.7 to 3 g/10 min.

Terpolymer (I) preferably has a melt flow rate MFR₂₁ of 10 to 50 g/10 min, more preferably of 15 to 45 g/10 min.

The low molecular weight polymer fraction of terpolymer (I) preferably has a melt index MFR₂ of 200 to 800 g/10 min, more preferably of 300 to 600 g/10 min.

Terpolymer (I) preferably comprises 30 to 60 wt.-%, more preferably 35 to 50 wt.-% and most preferably 38 to 45 wt.-% of the low molecular weight polymer fraction, the remainder being preferably the high molecular weight polymer fraction.

The overall comonomer content in the total polymer is preferably 1 to 7 mol-%, more preferably 2 to 6 mol-%.

Preferably, in the low molecular weight polymer the comonomer content is 0 to 2.5 mol-%, more preferably 0 to 2 mol-%. In the high molecular weight polymer is the comonomer content preferably 2.5 to 11 mol-%, more preferably 3 to 10 mol-%.

In the embodiments wherein terpolymer (I) comprises, or consists of, a) a low molecular weight homopolymer of ethylene and b) a high molecular weight terpolymer of ethylene, 1-butene and 1-hexene, it is preferred that the content of 1-butene in the final polymer is 1.0 to 2.0 % by weight and the content of 1-hexene is 4.0 to 6.0 % by weight.

Preferably, terpolymer (I) has a viscosity η measured at 0.05 rad/s of 10,000 to 65,000 Pa·s, more preferably of 15,000 to 60,000 Pa·s, and most preferably of 20,000 to 55,000 Pa·s.

Preferred multimodal terpolymer (I) is the commercially available Borshape^{™} FX1002 from Borealis.

FX1002 is a bimodal MDPE terpolymer. The low molecular weight fraction is a homopolymer of ethylene having an MFR₂ of 400 g/10 min, preferably produced in a loop reactor. In the high molecular weight fraction, preferably produced in a gas phase reactor, ethylene is co-polymerized with 1-butene and 1-hexene as comonomers. The density of the final resin is 937 kg/m³, the MFR₅ is 2 g/10 min and the MFR₂₁ is 42 g/10 min. The split (LMW/HMW) is 43/57. FX1002 has Mw/Mn of about 12 (from 11 to 13). The content of 1-butene in the final polymer is 1.5 % by weight and the content of 1-hexene is 4.5 % by weight. The viscosity η measured at 0.05 rad/s is 23000 (+/-3000) Pa·s.

In the present disclosure, the term "recycled low density ethylene polymer" refers to a recycled polymer material that comprises at least 80 wt.-%, preferably at least 75 wt.-%, more preferably at least 90 wt.-% and most preferably at least 95 wt.-% of LDPE, based on the total weight of the recycled low density ethylene polymer, which has been recycled. Accordingly, the "recycled low density ethylene polymer" may comprise up to 20 wt.-%, preferably up to 15 wt.-%, more preferably up to 10 wt.-% and most preferably up to 5 wt.-%, based on the total weight of the recycled low density ethylene polymer, of other (preferably recycled) polymer components such as for example LLDPE, MDPE and HDPE.

Recycled polymer material is a polymer material that is recovered from post-consumer waste and/or industrial waste. Post-consumer waste refers to objects having completed at least a first use cycle (or life cycle), i.e. having already served their first purpose; while industrial waste refers to the manufacturing scrap which does normally not reach a consumer.

As the opposite, the term "virgin" refers to freshly produced materials and/or objects prior to first use and not being recycled. In case that the origin of the polymer is not explicitly mentioned, the polymer is a "virgin" polymer.

In one embodiment of the present invention, the recycled LDPE originates from post-consumer waste.

Preferably, the recycled LDPE has an MFR₂ of from 0.1 to 10 g/10 min, more preferably from 0.2 to 5 g/10 min, still more preferably from 0.25 to 1.0 g/10 min and most preferably from 0.3 to 0.8 g/10 min, determined according to ISO 1133.

The recycled LDPE preferably has a density of from 910 to 945 kg/m³, preferably from 910 to 940 kg/m³, more preferably from 915 to 935 kg/m³ and most preferably from 918 to 930 kg/m³, determined according to ISO 1183.

The recycled LDPE preferably has a melting point (second melting) in the range of from 105 to 130 °C, preferably in the range from 108 to 125 °C, determined according to ISO 11357.

As the recycled LDPE, the product NAV101 as supplied by Ecoplast may be used.

The recycled LDPE is present in the core layer composition in an amount of equal or less than 80 wt.-%, preferably in an amount of 62 to 78 wt.-%, more preferably 65 to 75 wt.-%, and most preferably 68 to 72 wt.-%, based on the total weight of the core layer composition.

Multimodal ethylene terpolymer (II) of the layered film structure of the invention preferably comprises, or consists of, a multimodal polymer of ethylene with at least two different comonomers selected from alpha-olefins having from 4 to 10 carbon atoms, which has a ratio MFR₂₁/MFR₂ of 13 to 30 and a MWD of 5 or less.

Such multimodal ethylene terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such ethylene terpolymers as described in WO 2016/083208 which have a density in the range a density of 0.910 to 0.935 g/cm³ are also preferred embodiments of ethylene terpolymer (II) in the present application, whether or not explicitly described herein.

Multimodal ethylene terpolymer (II) preferably has a MFR₂ in the range of from 0.5 to 2 g/10 min, more preferably from 0.8 to 1.6 g/10 min.

Preferably, multimodal ethylene terpolymer (II) has a density of 0.920 to 0.933 g/cm³, more preferably of 0.923 to 0.930 g/cm³.

Multimodal ethylene terpolymer (II) preferably has a ratio MFR₂₁/MFR₂ of 15 to 30, more preferably of 15 to 25.

The at least two alpha-olefin comonomers having from 4 to 10 carbon atoms of multimodal ethylene terpolymer (II) are preferably 1-butene and 1-hexene.

Preferably, the total amount of comonomers present in the multimodal ethylene terpolymer (II) is of 0.5 to 10 mol-%, preferably of 1.0 to 8 mol-%, more preferably of 1.0 to 5 mol-%, more preferably of 1.5 to 5.0 mol-%.

Multimodal ethylene terpolymer (II), which preferably is a bimodal terpolymer, preferably comprises, or consists of, an ethylene polymer component (A) and an ethylene polymer component (B), wherein the ethylene polymer component (A) has higher MFR₂ than ethylene polymer component (B).

More preferably, the ethylene polymer component (A) has MFR₂ of 1 to 50 g/10 min, preferably of 1 to 40 g/10 min, more preferably of 1 to 30 g/10 min, more preferably of 2 to 20 g/10 min, more preferably of 2 to 15 g/10 min, and even more preferably of 2 to 10 g/10 min.

The ratio of the MFR₂ of ethylene polymer component (A) to the MFR₂ of the final multimodal ethylene terpolymer (II) is 2 to 50, preferably 5 to 40, more preferably 10 to 30, more preferably 10 to 25, and still more preferably 15 to 25.

Preferably, ethylene polymer component (A) comprises a different comonomer than the ethylene polymer (B).

Preferably, ethylene polymer component (A) has lower amount (mol%) of comonomer than ethylene polymer component (B), more preferably, the ratio of [the amount (mol%) of alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal polymer of ethylene (a)] is of 0.2 to 0.6, preferably of 0.25 to 0.5.

Preferably, the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

Preferably, ethylene polymer component (A) has different, preferably higher, density than the density of the ethylene polymer component (B).

The density of the ethylene polymer component (A) is preferably 0.925 to 0.950 g/cm³, more preferably 0.930 to 0.945 g/cm³.

Preferably, the multimodal ethylene terpolymer (II) comprises the ethylene polymer component (A) in an amount of 30 to 70 wt.-%, preferably of 40 to 60 wt.-%, more preferably of 35 to 50 wt.-%, more preferably 40 to 50 wt.-% and the ethylene polymer component (B) in an amount of 70 to 30 wt.-%, preferably of 60 to 40 wt.-%, more preferably of 50 to 65 wt.-%, more preferably 50 to 60 wt.-%, based on the total amount (100 wt.-%) of the multimodal terpolymer (II).

Most preferably, multimodal ethylene terpolymer (II) consists of the ethylene polymer components (A) and (B) as the sole polymer components. Accordingly, the split between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(50 to 60).

Preferred as multimodal ethylene terpolymers (II) are also such commercially available as Anteo^{™} from Borealis or Borouge having the properties as required herein, especially Anteo^{™} FK 2715.

Preferably, in the layered film structure according to the invention core layer C comprises 20 wt.-% or more of said multimodal ethylene terpolymer (I), more preferably 22 wt.-% or more, still more preferably 25 wt.-% or more. Preferably, in the layered film structure according to the invention core layer C comprises 38 wt.-% or less of said multimodal ethylene terpolymer (I), more preferably 35 wt.-% or less, still more preferably 32 wt.-% or less.

In one embodiment core layer C consists of multimodal ethylene terpolymer (I) and a recycled LDPE as defined herein.

External layer(s) E1 and E2 of the layered film structure of the invention may be made of the same polymer composition or of different polymer compositions in any one of the embodiments described herein for the polymer composition usable for layer E1 and/or E2. Preferably, E1 and E2 are made of the same polymer composition.

Preferably, external layer(s) E1 and/or E2 comprise(s) 60 wt.-% or more, more preferably comprise 65 wt.-% or more of said multimodal ethylene terpolymer (II).

In addition to multimodal ethylene terpolymer (II) external layer E1 and/or E2 may comprise a low density polyethylene (LDPE).

Preferably, if an LDPE is present in external layer(s) E1 and/or E2, it is used in an amount of 5 to 40 wt.-%, more preferably in an amount of from 10 to 35 wt.-%, and still more preferably in an amount of from 15 to 30 wt.-%.

The LDPE used in layer(s) E1 and/or E2 preferably has a density of 0.905 to 0.945 g/cm³, more preferably of 0.915 to 0.935 g/cm³, even more preferably of 0.918 to 0.927 g/cm³, and most preferably of 0.919 to 0.922 g/cm³.

Preferably, the LDPE used in layer(s) E1 and/or E2 has a MFR₂ of 0.05 to 10 g/10 min, more preferably of 0.10 to 5 g/10 min, still more preferably 0.20 to 3 g/10 min, and most preferably 0.25 to 0.70 g/10 min.

In one embodiment external layer(s) E1 and/or E2 consist(s) of multimodal ethylene terpolymer (II) and a LDPE as defined herein.

The layered film structure according to the invention may consist of core layer C and external layers E1 and E2.

The layered film structure of the invention according to any one of the embodiments described herein preferably has a thickness of 100 micrometer or lower, more preferably 60 micrometer or lower, and most preferably 50 micrometer or lower. Furthermore, the layered film structure of the invention according to any one of the embodiments described herein preferably has a thickness of 20 micrometer or higher, more preferably 30 micrometer or higher, and most preferably 40 micrometer or higher.

Core layer C in the layered film structure of the invention preferably has a thickness of 45 to 75% of the total film structure thickness, more preferably of 50 to 70% of the total film thickness.

External layer(s) E1 and/or E2 has/have each preferably a thickness of 10 to 25% of the total film structure thickness, preferably 15 to 25%.

Furthermore, preferably, the layered film structure of the invention has a Tear Elmendorf resistance in transverse direction measured on a 45 µm test film of 150 N/mm or higher, more preferably of 160 N/mm or higher and most preferably of 180 N/mm or higher. Preferably, the layered film structure of the invention has a Tear Elmendorf resistance in transverse direction measured on a 45 µm test film of 250 N/mm or lower, more preferably of 230 N/mm or lower and most preferably of 200 N/mm or lower.

Furthermore, preferably, the layered film structure of the invention has a Tear Elmendorf resistance in machine direction of 10 N/mm or higher, more preferably of 15 N/mm or higher and most preferably of 28 N/mm or higher. Preferably, the layered film structure of the invention has a Tear Elmendorf resistance in machine direction measured on a 45 µm test film of 40 N/mm or lower, more preferably of 35 N/mm or lower and most preferably of 32 N/mm or lower.

Furthermore, preferably, the layered film structure of the invention has a tensile modulus in transverse direction measured on a 45 µm test film of 200 MPa or higher, more preferably of 300 MPa or higher and most preferably of 400 MPa or higher. Preferably, the layered film structure of the invention has a tensile modulus in transverse direction measured on a 45 µm test film of 800 MPa or lower, more preferably of 600 MPa or lower and most preferably of 500 MPa or lower.

Furthermore, preferably, the layered film structure of the invention has a tensile modulus in machine direction measured on a 45 µm test film of 150 MPa or higher, more preferably of 200 MPa or higher and most preferably of 300 MPa or higher. Preferably, the layered film structure of the invention has a tensile modulus in machine direction measured on a 45 µm test film of 600 MPa or lower, more preferably of 500 MPa or lower and most preferably of 400 MPa or lower.

Preferably, the layered film structure of the invention has a dart drop impact (DDI) determined according to ASTM D1709 on a 45 µm test film of more than 70 g, preferably more than 80 g and most preferably more than 100 g. Furthermore, preferably, the layered film structure of the invention has a dart drop impact (DDI) determined according to ASTM D1709 on a 45 µm test film of less than 250 g, preferably less than 200 g and most preferably less than 150 g

Furthermore, preferably, the layered film structure of the invention has a shrinkage in oil at 140 °C according to DIN 55543-4 in machine direction measured on a 45 µm test film of 75% or higher, more preferably of 80% or higher. Preferably, the layered film structure of the invention has a shrinkage in oil at 140 °C according to DIN 55543-4 in machine direction measured on a 45 µm test film of 90% or lower, more preferably of 85% or lower.

Furthermore, preferably, the layered film structure of the invention has a shrinkage in oil at 140 °C according to DIN 55543-4 in transverse direction measured on a 45 µm test film of 10% or higher. Preferably, the layered film structure of the invention has a shrinkage in oil at 140 °C according to DIN 55543-4 in transverse direction measured on a 45 µm test film of 30% or lower, preferably 25% or lower.

The present invention also relates to a process for producing a layered film structure according to any one of the above described embodiments wherein the layers of the film structure are co-extruded.

The different polymer components in any of layers of the film are typically intimately mixed prior to layer formation, for example using a twin screw extruder, preferably a counter-rotating extruder. Then, the blends are converted into a coextruded film structure. Preferably, the blends are converted into a coextruded film structure on a blown-film line.

In order to manufacture such multilayer films according to the invention, normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The blown coextrusion can be effected at a temperature in the range 160 °C to 240 °C, and cooled by blowing gas (generally air) at a temperature of 10 to 50 °C to provide a frost line height of 1 to 8 times the diameter of the die.

The blow up ratio (BUR) should generally be in the range 1.2 to 6, preferably 1.5 to 4.

The layered film structure of the invention may also have been subjected to a stretching step, wherein the film after its production is stretched in the machine direction (MDO). Stretching may be carried out by any conventional technique using any conventional stretching devices which are well known to those skilled in the art.

The present invention also relates to a collation shrink film comprising or consisting of a layered film structure according to any one of the embodiments as described herein, and to the use of said collation shrink film for wrapping of articles.

In the following, the invention will further be illustrated by way of examples which refer to the following figures which show:

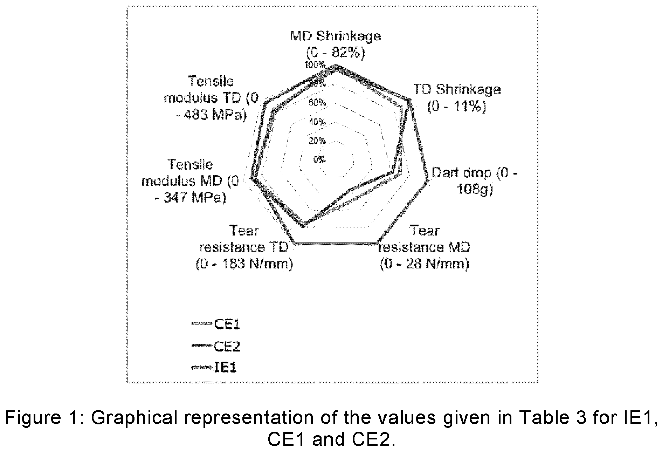

Fig. 1: Graphical representation of the values given in Table 3 for IE1, CE1 and CE2

### Measurement and Determination Methods

The following definitions of terms and determination methods apply for the above general description of the invention as well as to the below examples unless otherwise defined.

### a) Measurement of melt flow rate MFR

The melt flow rate (MFR) was determined according to ISO 1133 and is indicated in g/10 min. The higher the melt flow rate, the lower the viscosity of the polymer. The MFR is determined at 190 °C for polyethylene and at a loading of 2.16 kg (MFR₂), 5.00 kg (MFR₅) or 21.6 kg (MFR₂₁).

The quantity FRR (flow rate ratio) is an indication of molecular weight distribution and denotes the ratio of flow rates at different loadings. Thus, FRR_{21/5} denotes the value of MFR₂₁/MFR₅.

### b) Density

Density of the polymer was measured according to ISO 1183-1:2019 (method A) on compression moulded specimen prepared according to EN ISO 1872-2 (Feb 2007) and is given in g/cm³.

### c) Shrinkage

The shrinkage performance using an oil bath at 140°C (according to DIN 55543-4) was tested on the collation shrink films both in machine direction and transverse direction.

### d) Dart Drop Impact

The dart drop impact (DDI) was determined according to ASTM D1709 "method "A" on films with a thickness as indicated and produced as described below under "Examples".

### e) Mechanical Properties

### Tensile Modulus

Film TD (transversal direction) and MD (machine direction). Tensile moduli in machine and transverse direction were determined acc. to ISO 527-3 on films with a thickness of 45 micrometer at a cross head speed of 1 mm/min for the blown film of the inventive examples.

### Relative Tear resistance

The tear strength or tear resistance is measured using the ISO 6383/2 method. The force required to propagate tearing across a film specimen is measured using a pendulum device. The pendulum swings under gravity through an arc, tearing the specimen from a pre-cut slit. The specimen is fixed on one side by the pendulum and on the other side by a stationary clamp. The tear strength or tear resistance is the force required to tear the specimen. The relative tear resistance (N/mm) can be calculated by dividing the tear resistance by the thickness of the film. The films were produced as described below in the film preparation example. The tear strength or tear resistance is measured in machine direction (MD) and/or transverse direction (TD).

### Examples

Three layered film structures (one according to the invention and two comparative) were produced on an Alpine Hosokawa film line. All film structures were produced in the same processing conditions (BUR of 3:1, throughput 180 kg/h, thickness 45 micrometres (respectively 50 micrometres for CE3), diegap of 1.5 mm, die diameter 200 mm, lower neck-height, internal bubble cooling).

The thickness of the core layer was 31.5 µm and the thickness of each outer layer was 6.75 µm.

The polymers used for making the layered film structures of the invention and of the comparative examples are given in Table 1 below.

**Table 1:**

| **Resin name** | **Producer** | **Type** | **MFR 190°C/2.16kg (g/10 min)** | **Density (kg/m³)** | **Slip & antiblock** |
|---|---|---|---|---|---|
| FK2715 | Borouge | Bimodal terpolymer MDPE | 1.3 | 927 | No |
| Enable 4002MC | ExxonMobil | Metallocene C2-C6 copolymer MDPE | 0.25 | 940 | No |
| FK1820 | Borealis | bimodal terpolymer | 1.5 | 918 | Antioxidant + PPA |
| FT5236 | Borealis | Tubular LDPE | 0.75 | 923 | Yes |
| FX1002 | Borealis | terpolymer LLDPE | 2* | 937 | No |
| FT3200 | Borealis | Tubular LDPE | 0.25 | 920 | No |
| Supertough 40ST05 | Total | Bimodal metallocene C2-C6 copolymer | 0.5 | 940 | No |
| NAV101 (M) | Ecoplast | LDPE PCR | 0.5 | 923 | No |

| | | | | | |
|---|---|---|---|---|---|
| * MFR 190°C/5kg | | | | | |

The composition and structure of the layered films produced are given in Table 2. In Table 2 "E" means external layer, and "C" means core layer. The external layers of the films produced had each the same composition.

**Table 2: Layer structures of examples**

| Example | Layer structure | Core Layer Composition: polymers/amount wt.-% | | External Layer Composition: Polymers/amount wt.-% | | Thickness C µm | Thickness E µm |
|---|---|---|---|---|---|---|---|
| IE1 | E/C/E | NAV101(M) | 70 | FK2715 | 70 | 31.5 µm | 6.75 µm |
| | | FX1002 | 30 | FT3200 | 30 | | |
| CE1 | E/C/E | NAV101 (M) | 70 | FK2715 | 80 | 31.5 µm | 6.75 µm |
| | | Enable 4002MC | 30 | FT5236 | 20 | | |
| CE2 | E/C/E | NAV101 (M) | 70 | FK2715 | 80 | 31.5 µm | 6.75 µm |
| | | Supertough 40ST05 | 30 | FT5236 | 20 | | |
| CE3* | E/C/E | NAV101 (M) | 70 | FK1820 | 15 | 35 µm | 7.5 µm |
| | | | | FX1002 | 15 | | |
| | | FX1002 | 30 | FT3200 | 70 | | |

| | | | | | | | |
|---|---|---|---|---|---|---|---|
| * Inventive Example 1 of WO 2020/207940 A1 | | | | | | | |

**Table 3: Performance of layer structures**

| | **CE3** | **CE2** | **CE1** | **IE1** |
|---|---|---|---|---|
| MD Shrinkage, % | 72 | 82 | 81 | 78 |
| TD Shrinkage, % | 25 | 10.4 | 9.3 | 10.5 |
| Dart drop Impact (DDI), g | n.m. | 67 | 75 | 108 |
| Tear Elmendorf resistance in MD, N/mm | n.m. | 10 | 13 | 28 |
| Tear Elmendorf resistance in TD, N/mm | n.m. | 146 | 146 | 183 |
| Film tensile modulus MD, MPa | n.m. | 316 | 316 | 301 |
| Film tensile modulus TD, MPa | n.m. | 459 | 459 | 406 |

| | | | | |
|---|---|---|---|---|
| n.m. - not measured | | | | |

As can be seen from Table 3 and Figure 1, using FX1002 allows using 70 wt.-% PCR in the core layer while keeping shrinkage behaviour at the same level, but providing increased mechanical performance, especially increased dart drop impact. It can be further seen that the outer layer of the present invention also results in beneficial machine dimension shrinkage. Finally, the composition of the outer layers of the present invention allows, as shown by the comparison to CE3, that the film structure can be further downgauged without sacrificing the shrinkage behaviour.

## Claims

1. A layered film structure comprising a core layer C and external layers E1 and E2, wherein core layer C comprises a multimodal ethylene terpolymer (I) with at least one C₄ to C₁₂ alpha-olefin having an MFR₅ determined according to ISO 1133 of from 0.1 to 5 g/10 min and a density of 0.934 to 0.940 g/cm³ and a recycled LDPE having a MFR₂ determined according to ISO 1133 of from 0.1 to 10 g/10 min and a density in the range from 910 to 940 kg/m³ and wherein external layer(s) E1 and/or E2 comprise(s) a multimodal ethylene terpolymer (II) having an MFR₂ determined according to ISO 1133 of from 0.5 to 10 g/10 min and a density of 0.920 to 0.935 g/cm³.

2. The layered film structure according to claim 1 wherein the multimodal ethylene terpolymer (I) is a bimodal terpolymer comprising
a) a low molecular weight polymer which is a binary copolymer of ethylene and a C₄ to C₁₂ alpha-olefin and
b) a high molecular weight polymer which is either a binary copolymer of ethylene and 1-butene, if the low molecular weight polymer of a) is a binary copolymer of ethylene and a C₆ to C₁₂ alpha-olefin, or a terpolymer of ethylene, 1-butene and a C₆ to C₁₂ alpha-olefin.

3. The layered film structure according to any of the preceding claims wherein multimodal ethylene terpolymer (II) comprises a multimodal polymer of ethylene with at least two different comonomers selected from alpha-olefins having from 4 to 10 carbon atoms, which has a ratio MFR₂₁/MFR₂ of 13 to 30 and a MWD of 5 or less.

4. The layered film structure according to any one of the preceding claims wherein core layer C comprises 38 wt.-% or less of said multimodal ethylene terpolymer (I).

5. The layered film structure according to any one of the preceding claims wherein external layers E1 and/or E2 comprise(s) 60 wt.-% or more of said multimodal ethylene terpolymer (II).

6. The layered film structure according to any one of the preceding claims wherein the film structure has a thickness of 100 micrometer or lower.

7. The layered film structure according to any one of the preceding claims wherein external layers E1 and E2 have the same composition.

8. The layered film structure according to any one of the preceding claims wherein the layered film structure of the invention has a Tear Elmendorf resistance in transverse direction measured according to ISO 6383/2 of 150 N/mm or higher, preferably of 160 N/mm or higher and most preferably of 180 N/mm or higher.

9. The layered film structure according to any one of the preceding claims wherein the layered film structure of the invention has a Tear Elmendorf resistance in machine direction measured according to ISO 6383/2 of 10 N/mm or higher, preferably of 15 N/mm or higher and most preferably of 28 N/mm or higher.

10. The layered film structure according to any one of the preceding claims wherein the layered film structure of the invention has a tensile modulus in machine direction measured on a 45 µm test film according to ISO 527-3 of 150 MPa or higher, preferably of 200 MPa or higher and most preferably of 300 MPa or higher.

11. The layered film structure according to any one of the preceding claims wherein the layered film structure of the invention has a dart drop impact (DDI) determined according to ASTM D1709 on a 45 µm test film of more than 70 g, preferably more than 80 g and most preferably more than 100 g.

12. The layered film structure according to any one of the preceding claims wherein the film structure has a shrinkage in oil at 140 °C in machine direction determined according to ISO 55543-4 on a 45 µm test film of 75% or higher.

13. A process for producing a layered film structure according to any one of the preceding claims wherein the layers of the film structure are co-extruded.

14. A collation shrink film comprising or consisting of a layered film structure according to any one of claims 1 to 12.

15. Use of a collation shrink film according to claim 14 for wrapping of articles.
